# EUROPEAN PATENT SPECIFICATION

(11) **EP 1 924 734 B1**
(45) Date of publication and mention of the grant of the patent: **04.01.2017**
(21) Application number: 06779452.9
(22) Date of filing: 15.09.2006
(51) Int. Cl.: D06M 13/513, D06M 10/00, D06M 10/08, C09C 1/36, C09C 1/40, C08J 3/12, C08J 7/04, C09D 183/06, C09D 183/08, D06M 15/643, D06M 23/00, C09C 3/12, C09C 1/30, C09D 183/04

(54) **METHOD FOR ATTACHMENT OF SILICON-CONTAINING COMPOUNDS TO A SURFACE AND FOR THE SYNTHESIS OF HYPERVALENT SILICON-COMPOUNDS**
VERFAHREN ZUM FIXIEREN VON SILICIUMHALTIGEN VERBINDUNGEN AUF EINER OBERFLÄCHE UND ZUR SYNTHESE VON HYPERVALENTEN SILICIUMVERBINDUNGEN
PROCÉDÉ POUR LA FIXATION DE COMPOSÉS CONTENANT DU SILICIUM SUR UNE SURFACE ET POUR LA SYNTHÈSE DE COMPOSÉS DE SILICIUM HYPERVALENT

(30) Priority: 15.09.2005 US 722399 P; 28.04.2006 GB 0608534
(43) Date of publication of application: 28.05.2008
(73) Proprietor: Alexium, Inc., Greer, SC 29650 (US)
(72) Inventor: OWENS, Jeffrey, Fredericksburg, Virginia 22405 (US)
(74) Representative: Boult Wade Tennant
(86) International application number: PCT/GB2006/003440
(87) International publication number: WO 2007/031775

(56) References cited:
- DE-A1- 4 103 086
- DE-A1- 19 855 718
- JP-A- H01 239 170
- MÉNDEZ F., GAZQUEZ J.L.: "Chemical reactivity of hypervalent silicon compounds" J.CHEM.SCI., vol. 117, no. 5, September 2005 (2005-09), pages 525-531, XP002411425
- DATABASE WPI Week 199021, Derwent Publications Ltd., London, GB; AN 1990-158625 & JP H01 239 170 A (TORAY IND INC) 25 September 1989

## Description

The present invention relates to a method for inducing a hypervalent state within silicon-containing compounds by which they can be chemically attached to a surface or substrate and/or organized onto a surface of a substrate. The compounds when attached to or organised on the surface may have different physical and/or chemical properties compared to the starting materials.

The chemical attachment of silicon-containing compounds to surfaces is known to the skilled person. Conventionally, this is achieved by contacting a suitable surface with a suitable silicon containing compound in the presence of an activator and heating the surface. The reaction between the surface and the silicon-containing compounds is relatively slow. An example of the attachment of siloxanes to a polyester/cotton fabric using the application of heat is disclosed in US4417066.

DE19855718 discloses a method of curing a reactive organopolysiloxane to form elastomer mouldings.

DE4103086 discloses a method for silicon deposition on a substrate using microwave radiation to cause thermal decomposition of a simple silicon-containing compound.

JP H01 239170 discloses an improved water-resistant fabric. The water resistant fabric is obtained with a high density weave and by the application of a graft polymerisation process to add an acrylic acid polymer, such as one formed from methacrylic acid.

In a first aspect, the present invention provides a method for the chemical attachment of one or more silicon-containing compounds to a substrate, the method comprising:
providing one or more silicon-containing compounds selected from siloxane compounds, silanol compounds, silyl ether compounds, silanolate compounds, halosilane compounds, silatrane compounds, and silazane compounds;
contacting one or more of the silicon-containing compounds with a surface of a substrate a plurality of nucleophilic sites thereon, wherein the nucleophilic sites comprise one or more nucleophilic groups containing one or more of 0, S and N;
and exposing the silicon-containing compounds and the surface to electromagnetic radiation having a frequency from 0.3 to 30 GHz,
whereby the one or more silicon-containing compounds become chemically attached to the nucleophilic groups.

In a second aspect, the present invention provides
a method for creating an array of silicon-containing compounds on a surface of a substrate, the method comprising:
providing one or more silicon-containing compounds selected from siloxane compounds, silanol compounds, silyl ether compounds, silanolate compounds, halosilane compounds, silatrane compounds, and silazane compounds;
contacting one or more of these silicon-containing compounds with a surface of a substrate having a plurality of nucleophilic sites thereon, wherein the nucleophilic sites comprise one or more nucleophilic groups containing one or more of 0, S and N;
and exposing the substrate and the silicon-containing compounds to electromagnetic radiation having a frequency of from 0.3 to 30 GHz
whereby the one or more silicon-containing compounds become chemically attached to the nucleophilic groups.

In the first and second aspects, the surface of the substrate may be on the exterior or interior of the substrate. The substrate may, for example, be a porous polymer matrix and the silicon-containing compounds may be arranged on or attached to the interior surfaces of the pores of the matrix.

There is also disclosed a method for the synthesis of silicon-containing hypervalent compounds, the method comprising:
providing one or more silicon-containing compounds selected from siloxane compounds, silanol compounds, silyl ether compounds, silanolate compounds, halosilane compounds, silatrane compounds, and silazane compounds;
optionally contacting the one or more silicon-containing compounds with a surface of a substrate;
and exposing the silicon-containing compounds and, if present, the substrate to electromagnetic radiation having a frequency of from 0.3 to 30 GHz. The substrate may have one or more nucleophilic sites on its surface or one or more compounds having nucleophilic groups, such as alcohols, may be present, and if a substrate is present, they may be located on the surface of the surface.

In another aspect, the present invention provides a substrate having one or more silicon-containing compounds on the surface thereof, wherein the one or more silicon-containing compounds have been attached and organised into an array on the surface by the method of the present invention.

There is also disclosed a hypervalent silicon-containing compound formable by the method of the present invention.

The present invention will now be further described. In the following passages different aspects of then invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

In the first and second aspects of the invention, the silicon-containing compound may be a compound of the formula I 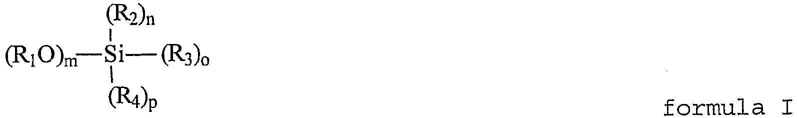 or a polymer having repeating units of formula II, which may be terminated by hydrogen, hydroxyl, an alkyl or an amine group at one or both ends of the polymer chain 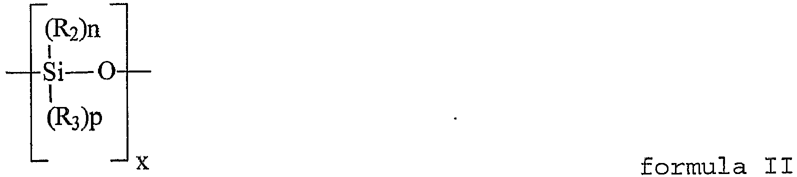
wherein R₁ is hydrogen or an alkyl, preferably a C₁ to C₆ alkyl, more preferably, a C₁ or C₂ alkyl, such as methyl or ethyl, and m is 1 to 4, preferably 3;
R₂, R₃ and R₄ are each independently selected from alkyl, alkylglycidoxy, alkylamino, aminoalkyl, acrylate, alkylhydantoin, alkylacrylate and alkylalkene; and
in formula I, n, m, o and p, are each 0 to 3, providing that m+n+o+p = 4;
in formula II, n and p are each 0, 1 or 2, providing that n + p = 2.

The polymer preferably includes electron donor groups on at least some of its monomers. These electron donor groups may be substituents on R₂ and/or R₃ in the formula II above. Electron donor groups include, but are not limited to, hydroxyl, amine, sulfhydryl and carboxyl. X, the number of repeating units in the polymer, may be any appropriate number. X may be 2 to 10,000, preferably 2 to 1000.

Alkyl is preferably a C₁ to C₂₅ alkyl, and may be C₃ to C₁₈ alkyl. Alkyl may be a substituted or non-substituted alkyl. Alkyl may be a halo-alkyl, preferably a haloalkyl in which a halo group is located at the distal end of the alkyl chain from the silicon. The haloalkyl is preferably a chloroalkyl.

Preferably, the silicon-containing compound is a compound of formula I, wherein m is 3, n is 1 and o and p are both 0, R₁ is hydrogen, methyl or ethyl.

Preferably at least one of R₂, R₃ and/or R₄ is of the formula III

-(CH₂)_{y}-R₅ formula III

wherein Y is 1 to 5, preferably 3, R₅ is selected from hydrogen, halogen, NH₂, C₁ to C₁₈ alkyl,
C₁ to C₁₈ alkyldimethylammonium, alkylmethacryate, preferably ethyl or propylmethacrylate, 5,5-dialkylhydantoin, preferably 5,5-dimethylhydantoin, alkylenediamine, preferably ethylenediamine, perfluoroalkyl, preferably perfluorooctyl and 3-glycidoxy.

The silicon-containing compound may comprise one or 5 more of [3- (trimethoxysilyl)propyl] - octadecyldimethylammonium chloride, 3(3-triethoxysilylpropyl)-5,5-dimethylhydantoin, potassium trimethylsilanolate, triisopropylsilanol, methoxydimethyloctylsilane, hydroxy terminated poly (dimethylsiloxane) , (3-chloropropyl)triethoxysilane, (3-chloropropyl)dimethoxymethylsilane, octadecyltrimethoxysilane, 3-aminopropyltriethoxysilane, 3-(trimethoxysilyl)propylmethacrylate, N-[3 - (trimethoxysilyl)propyl]-ethylenediamine, and 3-glycidoxypropyltrimethoxysilane, 1H,1H,2H,2H-perfluorodecyltrimethoxysilane.

Preferably, the silicon-containing compound is [3-(trimethoxysilyl)propyl]-octadecyldimethylammonium chloride or 3 (3-triethoxysilylpropyl)-S,5-dimethylhydantoin, 1H,1H,2H,2H-perfluorodecyltrimethoxysilane or a mixture thereof.

In the first and second aspects of the invention, a solution of suspension of the silicon containing compounds may be contacted with the substrate. The solution and/or suspension preferably comprises a polar solvent, more preferably acetone and/or an alcohol, preferably both. The alcohol preferably comprises methanol and/or ethanol. Alternatively, the silicon-containing compound may be solvent-free, i.e. not in the form of a solution or suspension.

The substrate is a material having nucleophilic sites on its surface. The nucleophilic sites comprise one or more nucleophilic groups containing one or more of 0, S and N. For example, the nucleophilic groups may be selected from OH, SH and NH2. The substrate may comprise a fabric material. It has been found that the nucleophilic groups bind to the silicon atoms of the silicon-containing compounds on contact and with exposure to electromagnetic radiation having a frequency of from 0.3 to 30 GHz. This reaction normally occurs within seconds, as opposed to hours for conventional methods, such as merely heating.

The present inventors have found that the method of the present invention can produce organised alignment (i.e. an array) of silicon-containing compounds on the surface of a substrate. The properties of the silicon-containing compounds often differ from those of the prior art, e.g. silicon compounds attached through the use of heat. For example, the silicon-containing compounds on the substrate may have different physical and chemical properties such as increased hydrophobicity or hydrophilicity and/or increased biocidal efficacy. Without being bound by theory, it is believed that the use of microwave radiation induces a hypervalency around the silicon atom, i.e. it coordinates to more than 4, possibly to 5 or 6 available ligands. When the microwave treatment is stopped, the silicon will often relax back to a tetra-coodinate state. The hypervalent state is believed to leads to a more organised arrangement of silicon-containing compounds on the surface of a substrate. Hypervalency in silicon has been shown to occur in the following known reaction between tetramethoxy silane and catechol, which was carried out in ethanol under microwave treatment:

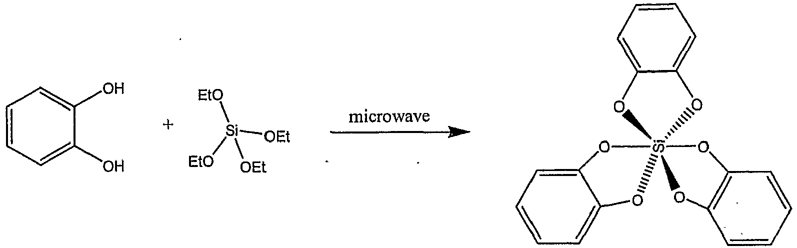

Other reactions known to result in hypervalent-silicon compounds include:

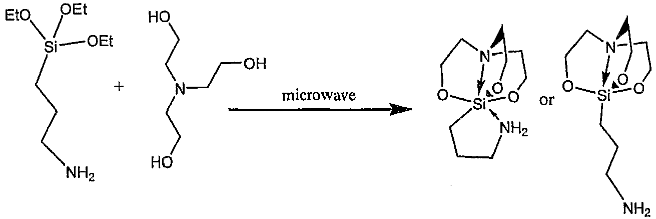

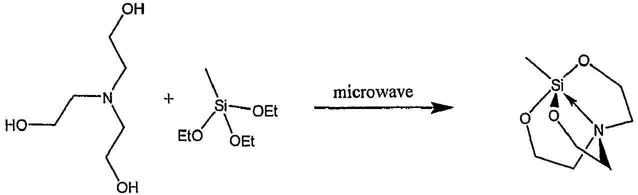

The above reactions and others that result in hypervalent silicon can be found in the following prior art documents: Chem. Rev. 1993, 93, 1371-1448, Chult et al; Chem. Rev. 1996, 96, 927-950, Holmes; and Journal of Organometallic Chemistry, 1990, 389, 159-168, Cerveau et al.

The hypervalent-silicon products produced in the above reactions are sufficiently stable to be characterised. It is believed that a similar hypervalency occurs in the process of the present invention, although the hypervalent silicon may revert to a tetravalent silicon following microwave treatment. It is surprising that, irrespective of whether or not the silicon remains in a hypervalent state following the microwave treatment, a more organised arrangement of silicon-containing compounds on the surface of the substrate is observed.

Si-OR excitation via electromagnetic radiation in the presence of an appropriate electron donor facilitates the cleavage of the Si-OR bond and is believed to induce the formation of hypervalent siloxane species with available electron donors. The electron donor for this exchange can take the form of virtually any nucleophile, induced nucleophile, nucleophilic region, or Lewis base. The resulting hypervalent species is then thought to either relax into their ground state, at which time the silane species is tetracoordinate, or, if the hypercoordinated product is stable, the silane product can remain in the hypervalent state as either a pentacoordinate or hexacoordinate system. The electromagnetic excitation within the siloxane induces specific conformations within the new species, which leads to increased and specific organization in the resting state of the newly formed species. If the substrate is a polymer, the specific organization of the silicon-containing on the surface or in the matrix of a polymer can change the chemical and physical properties of the polymer as a whole. This phenomenon is not temperature dependant.

The method of the present invention avoids the need to use activators, catalysts and conventional curing processes. This therefore allows the attachment of 'delicate' functionalities. For example, glycidoxy containing siloxane and acrylate containing siloxanes are examples of delicate silicon containing compounds and proteins/enzymes are examples of delicate substrates, to which one may wish to attach a silicon-containing substrate.

Preferably, the microwaves are produced using a power rating of 650 Watts or less, more preferably of from 65 to 650 Watts. The microwaves may be produced using a power rating of from 135 to 400 Watts.

Preferably, the microwaves have a frequency of from 0.3 to 10 GHz, more preferably of from 1 to 3 GHz.

To reduce the possible degradation of delicate silicon-containing compounds and/or delicate substrates, one or more of the following may be used: irradiation at a reduced power level, for example microwaves produced using a power rating of 400 Watts or less, preferably 135 Watts or less, or subjecting the substrate and silicon-containing compounds to microwave irradiation and relaxation (no microwave irradiation) in alternating intervals: for example a period of irradiation of preferably 5 to 30 seconds, more preferably 10 to 20 seconds, most preferably 15 seconds, followed by a period of relaxation of preferably 2 to 30 seconds, more preferably 5 to 15 seconds, most preferably 10 seconds, and optionally repeating this process as often as required. It has been found that, for many compounds containing an Si-O moiety, this is more sensitive to microwave radiation than other 'delicate' functionalities and therefore cleavage of the Si-O bond may be achieved without degradation of the other functionalities. This is an improvement over the prior art in which heating of silicon-containing compounds for periods to attach them to a substrate can lead to degradation of the delicate functionalities in the silicon-containing molecules, since the heat required to cleave the Si-O bond is sufficient to degrade the delicate functionalities.

The microwaves can be directed at particular portions of the substrate and therefore allows for regioselective attachment and/or arrangement of the silicon-substituted compounds and for reactions that can be initiated that would not be possible using traditional methods.

The present invention has been found to be far more effective in attaching silicon-containing compounds to a substrate surface compared to traditional methods such as heating and using activators - more than 80% of the silicon-containing compounds can be attached under certain conditions to the surface using the method of the present invention.

The substrate may comprise a natural material. The material may be a cloth material. The material may comprise one or more materials selected from cotton, wool and leather. The material may be woven or non-woven. The material may comprises fibres of natural and/or synthetic material. The synthetic material may comprise a woven or nonwoven fabric material to include, but not limited to fabrics wherein the material comprises one or more of the following; cotton, polyester, nylon, wool, leather, rayon, polyethylene, polyvinylchloride, polyvinylalcohol, polyvinylamine and polyurea.

The substrate may be in the form of particles. The particles may have a diameter of from 10 nm to 1 mm, preferably 100 to 1000 nm.

The substrate may comprise a metal oxide. The metal oxide may be selected from one or more of aluminium oxide, titanium dioxide, magnesium oxide, calcium oxide, silicon dioxide and zinc oxide.

The substrate may comprise a natural mineral. The substrate may comprise one or more materials selected from kaolinite, barasym, silica, montmorillonite, vermiculite, bohemite and quartz.

The substrate may be porous. The substrate may comprise a molecular sieve. The substrate may comprise a zeolite.

The substrate may comprise a polymer. The polymer may be in the form of a porous matrix. The substrate may comprise a plastic material. The substrate may comprise polyurethane and/or nylon, polyester, nylon, rayon, polyethylene, polyvinylchloride, polyvinylalcohol, polyvinylamine and polyurea.

The substrate may comprise a carbohydrate.

In the first and second aspects of the present invention, an alcohol may be present. The substrate may comprise an alcohol. The substrate may have an alcohol on its surface. The alcohol may comprise a diol, which may be a vicinal diol, or a triol. The alcohol may be selected from one or more of an alkyl diol, preferably a C₂ to C₂₅ alkyl diol, an alkyl triol, preferably a C₃ to C₂₅ alkyl triol and a phenyl diol, preferably a vicinal phenyl diol. Each hydroxyl group in the triol is preferably vicinal to one of the other hydroxyl groups. The alcohol may be selected from catechol, ethylene glycol or glycerol.

The substrate may comprise a silicon-dioxide based material, such as glass, silicon dioxide, sand, and silica.

The method of the present invention may involve:
contacting the substrate with a silicon-containing compound as defined herein and exposing the compounds to electromagnetic radiation having a frequency of from 0.3 to 30 GHz, and subsequently treating the substrate with a halogenating substance. The silicon-containing compound preferably comprises 3 (3-triethoxysilylpropyl)-5, 5-dimethylhydantoin. The halogenating substance may comprise a chlorinating substance, including, but not limited to a bleaching agent, for example a hypochlorite such as sodium hypochlorite.

Following treating the substrate with the halogenating agent, the substrate may be dried. The substrate may be dried by exposing the substrate to a temperature of 20°C or more, preferably 30°C or more, more preferably 35°C for a period including, but not limited to, 1 hour or more, preferably 4 hours or more.

The present invention will now be illustrated with reference to the following non-limited Examples.

### Examples

### Example 1

Separate swatches of cotton were each treated with a solution containing one of:
1. [3-(trimethoxysilyl)propyl]-octadecyldimethylammonium chloride,
2. 3(3-triethoxysilylpropyl)-5,5-dimethylhydantoin,
3. potassium trimethylsilanolate,
4. triisopropylsilanol,
5. methoxydimethyloctylsilane,
6. hydroxy terminated poly(dimethylsiloxane),
7. (3-chloropropyl)triethoxysilane,
8. (3-chloropropyl)dimethoxymethylsilane,
9. octadecyltrimethoxysilane,
10. 3-aminopropyltriethoxysilane,
11. 3-(trimethoxysilyl)propylmethacrylate,
12. N-[3-(trimethoxysilyl)propyl]-ethylenediamine, and
13. 3-glycidoxypropyltrimethoxysilane.

Each solution contained acetone, ethanol and methanol.

Each swatch of cotton was then irradiated at a frequency between 0.30-30 GHz for a period of time dependant on the properties of the silicon containing compound that was attached. All experiments were performed initially at 2.45 Ghz, with power level being varied depending on the nature of the attached functional group. In general, the procedure was first attempted at full power for full two cycles of the following program: 30s 50% power (325 Watts), 30s relaxation (magnetron disengaged), 30s 50% power, 30s relaxation, 30s 100% power, allow to cool to room temperature, then repeat cycle. If the procedure "cracked" the reactants, then the irradiation time and power level were reduced accordingly until the procedure yielded the desired result. The samples were then washed, rinsed thoroughly and dried overnight at 35° C.

The attachment of the silicon-containing compounds was confirmed by: 1. an overall increase in weight of the cloth (all samples), 2. a change in the physical characteristics of the cloth (all), 3.biocidal efficacy of the treated fabric (2 samples, see below), 4. FTIR spectroscopy (all), 5. elemental analysis (all), and 6. ionic strength of the product in distilled, deionized water (all).

Conclusions from Example 1: 1. the method is nonspecific with respect to the type of functionality that can be attached, and the compound may comprise a silyl ether, silanol, or silanolate; 2. The process works for silyl ethers, silanols and silanolates; and 3. by tuning the frequency and power level, the method can be tailored to avoid degradation of with other functionalities within the system; and 4. the process works on cotton.

### Example 2

100 mg samples of nanoscale bohemite (300 nm from Sasol) were treated with one of the following solutions of:
1. [3-(trimethoxysilyl)propyl]-octadecyldimethylammonium chloride
2. 3(3-triethoxysilylpropyl)-5,5-dimethylhydantoin,
3. potassium trimethylsilanolate,
4. triisopropylsilanol,
5. methoxydimethyloctylsilane,
6. hydroxy terminated poly(dimethylsiloxane),
7. (3-chloropropyl)triethoxysilane,
8. (3-chloropropyl)dimethoxymethylsilane,
9. octadecyltrimethoxysilane,
10. 3-aminopropyltriethoxysilane,
11. 3-(trimethoxysilyl)propylmethacrylate,
12. N-[3-(trimethoxysilyl)propyl]-ethylenediamine, and
13. 3-glycidoxypropyltrimethoxysilane.

Each solution contained one or more of acetone, ethanol and methanol.

100 mg of bohemite is approximately 1 mmol. To this 1 mmol of bohemite approximately 0.1 mmol of silane dissolved in approximately 0.5-1.0 mL of acetone was added. For example, the MW of 3(3-triethoxysilylpropyl)-5,5-dimethylhydantoin is 332, so 33.2 mg of silane was dissolved in 1 mL. For the reactions above, the procedure was scaled up to full molar scale. Surprisingly, the "batch" scale actually worked much better than this small scale experiment, i.e.. a higher and better degree of attachment of the silicon on the bohemite was observed.

The samples were then irradiated at a frequency between 0.30-30 GHz for a period of time depending on the properties of the silyl ether, silanolate or silanol that was attached. The irradiation procedure described in Example 1 above was used. The samples were then washed with a minimal amount of ice cold ethanol and then twice with surfactant-containing water; the samples were then rinsed with water thoroughly and dried overnight at 35° C.

The attachment of the silicon-containing compounds was confirmed by: 1. a change in the physical characteristics of the treated nanoparticles, 2. biocidal efficacy of the treated nanoparticles (2 samples, in particular: solutions 1 and 2), 4. FTIR spectroscopy (all), 5. elemental analysis (all), and 6. ionic strength of the product in distilled, deionized water (all).

Conclusions from Example 2: 1. the process is nonspecific with respect to the type of functionality that can be attached, and the silicon-containing compounds can include a silyl ether, silanol, or silanolate; 2. by tuning the frequency and power level, the process can be tailored not to interfere with other functionalities within the system; and 3. The process works well on bohemite

### Example 3

Two samples of each of the substrates listed below were treated with either a solution of [3-(trimethoxysilyl)propyl]-octadecyldimethylammonium chloride or a solution of 3(3-triethoxysilylpropyl)-5,5-dimethylhydantoin.

The substrate samples were: 1. Cotton, 2. aluminum oxide, 3. titanium dioxide, 4. glass, 5. nylon, 6. kaolinite, 7. barasym, 8. silicon dioxide, 9. wool, 10. leather, 11. silica, 12. molecular sieves, 13. montmorillonite, 15. polyurethane, 16. ethylene glycol, 17. glycerol, 18. catechol, 19. zeolite, 20. vermiculite, 21. bohemite, 22. polyester. 23. triethanolamine

The samples were irradiated at a frequency between 0.30-30 GHz for a period of time, all dependant on the microwave absorbing properties of the substrate. The irradiation procedure described in Example 1 above was used. The samples were then washed, rinsed thoroughly and dried overnight at 35° C. The samples treated with 3(3-triethoxysilylpropyl)-5,5-dimethylhydantoin) were also charged with dilute hypochlorite (to generate the chloramine) and again washed, rinsed and dried.

The attachment of the silicon-containing compounds to each substrate was confirmed by:
1. a change in the physical characteristics of the treated samples (all), 2. biocidal efficacy of the treated samples (all solid samples), 3. oxidation of iodide to elemental iodine (samples treated with 3(3-triethoxysilylpropyl)-5,5-dimethylhydantoin), 4. FTIR spectroscopy (all), 5. ionic strength of the product in distilled, deionized water (all), 6. HNMR (2 samples: those treated with Triethanolamine-hydantoin silane and catechol-hydantoin silane]), 7. GCMS (3 samples: those treated with catechol hydantoin silane, triethanolamine hydantoin silane and glycerol hydantoin silane).

Conclusions from Example 3: 1. the process will work for any substrate that contains an appropriate S, and/or O, and/or N, and/or Nu; 2. by tuning the frequency and power level, the process can be tailored not to interfere with other functionalities within the system; and 3. the irradiated materials are distinctly different from the equivalent heat treated version (from HNMR and GCMS)

### Example 4

Six swatches of 50:50 nylon:cotton cloth were each dipped one time in a known solution of 3(3-triethoxysilylpropyl)-5,5-dimethylhydantoin. The first set of three swatch samples were irradiated at a frequency between 0.30-300 GHz for a period of time as described above in Example 1. This first set of samples was then chlorinated with dilute bleach, washed, rinsed thoroughly, and dried overnight at 35° C. As a comparative Example, the second set of three swatch samples was heat cured overnight at 80° C. The second set of samples was then chlorinated with dilute bleach, washed, rinsed thoroughly, and dried overnight at 35° C. The attachment of the hydantoin functionality of both sets of samples was confirmed by FTIR, and by iodometric titration. Results demonstrated that the irradiated samples retained 80% higher chlorine content over the heat treated samples. Additionally, the irradiated samples demonstrated hypervalent character by differences in ionic strength.

Conclusions from Example 4: the irradiation process is more effective and efficient than heat treatment at attaching silyl ethers, silanols and silanolates to substrates.

### Example 5

The biocidal character of heated treated samples of 50:50 cotton:nylon were compared with irradiated samples from Example 4. Both sets of samples possessed the same active chlorine content as determined by iodometric titration. Results showed high excellent efficacy of irradiated samples to Bacillus anthracis spores while heat treated samples demonstrated minimal activity against Bacillus anthracis spores.

Conclusions from Example 5: The irradiated materials are distinctly different from the equivalent heat treated version. The irradiation process produces a product that is a more efficient sporicide than the heat cured process.

## Claims

1. A method for the chemical attachment of one or more silicon-containing compounds to a substrate, the method comprising:
providing one or more silicon-containing compounds selected from siloxane compounds, silanol compounds, silyl ether compounds, silanolate compounds, halosilane compounds, silatrane compounds, and silazane compounds;
contacting one or more of the silicon-containing compounds with a surface of a substrate having a plurality of nucleophilic sites thereon, wherein the nucleophilic sites comprise one or more nucleophilic groups containing one or more of O, S and N;
and exposing the silicon-containing compounds and the surface to electromagnetic radiation having a frequency from 0.3 to 30 GHz,
whereby the one or more silicon-containing compounds become chemically attached to the nucleophilic groups.

2. A method as claimed in claim 1, wherein the silicon-containing compounds attached to the substrate create an array on the surface of the substrate.

3. A method as claimed in claim 2, wherein the substrate has one or more nucleophilic sites on its surface or one or more compounds having nucleophilic groups are present on the surface.

4. A method as claimed in claim 3, wherein the one or more compounds having nucleophilic groups comprise an alcohol.

5. A method as claimed in any one of the preceding claims, wherein the silicon-containing compound comprises a compound of the formula I 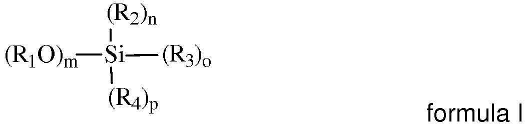 or a polymer having repeating units of formula II, which may be terminated by hydrogen or an alkyl group at one or both ends of the polymer chain, 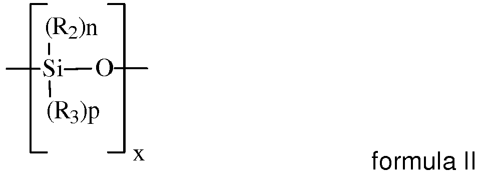
wherein R₁ is hydrogen or an alkyl, preferably a C₁ to C₆ alkyl, more preferably, a C₁ or a C₂ alkyl, such as methyl ethyl, and m is 1 to 3, preferably 3;
R₂, R₃ and R₄ are each independently selected from alkyl, alkylglycidoxy, alkylamino, aminoalkyl, acrylate, alkylhydantoin, alkylacrylate and alkylalkene; and
in formula I, n, m, o and p, are each 0 to 3, providing that m+n+o+p = 4,
in formula II, n and p are each 0, 1 or 2, providing that n + p = 2.

6. A method as claimed in claim 5, wherein the silicon-containing compound is a compound of formula I, wherein m is 3, n is 1 and o and p are both 0, R₁ is hydrogen, methyl or ethyl.

7. A method as claimed in claim 5 or claim 6, wherein R₂, R₃ and/or R₄ is of the formula III
-(CH₂)_{y}-R₅ formula III
wherein Y is 1 to 5, preferably 3, R₅ is selected from hydrogen, halogen, NH₂, C₁ to C₁₈ alkyl, C₁ to C₁₈ alkyldimethylammonium, alkylmethacryate, preferably ethyl or propylmethacrylate, 5,5-dialkylhydantoin, preferably 5,5-dimethylhydantoin, alkylenediamine, preferably ethylenediamine, perfluoroalkyl, preferably perfluorooctyl and 3-glycidoxy.

8. A method as claimed in any one of claims 1 to 4, wherein the one or more silicon-containing compounds are selected from [3-(trimethoxysilyl)propyl]-octadecyldimethylammonium chloride, 3(3-triethoxysilylpropyl)-5,5-dimethylhydantoin, potassium trimethylsilanolate, triisopropylsilanol, methoxydimethyloctylsilane, hydroxy terminated poly(dimethylsiloxane), (3-chloropropyl)triethoxysilane, (3-chloropropyl)dimethoxymethylsilane, octadecyltrimethoxysilane, 3-aminopropyltriethoxysilane, 3-(trimethoxysilyl)propylmethacrylate, N-[3-(trimethoxysilyl)propyl]-ethylenediamine, and 3-glycidoxypropyltrimethoxysilane, 1H,1H,2H,2H-perfluorodecyltrimethoxysilane.

9. A method as claimed in claim 8, wherein the one or more silicon-containing compound are selected from [3-(trimethoxysilyl)propyl]-octadecyldimethylammonium chloride and 3(3-triethoxysilylpropyl)-5,5-dimethylhydantoin.

10. A method as claimed in any one of the preceding claims, wherein the substrate comprises a woven or nonwoven fabric material.

11. A method as claimed in claim 10, wherein the fabric material is selected from one or more of cotton, polyester, nylon, wool, leather, rayon, polyethylene, polyvinylchloride, polyvinylalcohol, polyvinylamine and polyurea.

12. A method as claimed in any one of claims 1 to 9, wherein the substrate comprises one or more materials selected from aluminum oxide, titanium dioxide, glass, nylon, kaolinite, barasym, silicon dioxide, silica, molecular sieves, montmorillonite, polyurethane, ethylene glycol, glycerol, catechol, zeolite, vermiculite, and bohemite.

13. A method as claimed in any one of the preceding claims, the method comprising contacting the substrate with 3(3-triethoxysilylpropyl)-5,5-dimethylhydantoin, exposing the compounds to electromagnetic radiation having a frequency of from 0.3 to 30 GHz, and subsequently treating the substrate with a halogenating substance.

14. A substrate having silicon-containing compounds chemically attached to a surface thereof, wherein the silicon-containing compounds are attached and organised into an array on the surface by the method as defined in any one of claims 2 to 13.

15. The substrate of claim 14, wherein the silicon-containing compounds have been regioselectively attached to the surface of the substrate.

## Patentansprüche

1. Verfahren zur chemischen Anlagerung von einer oder mehreren siliciumhaltigen Verbindungen an ein Substrat, wobei das Verfahren Folgendes aufweist:
Bereitstellen von einer oder mehreren siliciumhaltigen Verbindungen, die aus Siloxan-Verbindungen, Silanol-Verbindungen, Silylether-Verbindungen, Silanolat-Verbindun-gen, Halosilan-Verbindungen, Silatran-Verbindungen und Silazan-Verbindungen ausgewählt sind;
Kontaktieren von einer oder mehreren der siliciumhaltigen Verbindungen mit einer Oberfläche eines Substrats, die eine Mehrzahl nucleophiler Stellen darauf aufweist, wobei die nucleophilen Stellen eine oder mehrere nucleophile Gruppen aufweisen, die eines oder mehrere aus O, S und N enthalten;
und Freilegen der siliciumhaltigen Verbindungen und der Oberfläche für elektromagnetische Strahlung mit einer Frequenz von 0,3 bis 30 GHz,
wodurch sich die eine oder die mehreren siliciumhaltigen Verbindungen chemisch an die nucleophilen Gruppen anlagern.

2. Verfahren nach Anspruch 1, wobei die siliciumhaltigen Verbindungen, die am Substrat anlagern, eine Anordnung auf der Oberfläche des Substrats bilden.

3. Verfahren nach Anspruch 2, wobei das Substrat eine oder mehrere nucleophile Stellen auf seiner Oberfläche aufweist oder eine oder mehrere Verbindungen, die nucleophile Gruppen aufweisen, auf der Oberfläche vorhanden sind.

4. Verfahren nach Anspruch 3, wobei die eine oder die mehreren Verbindungen, die nucleophile Gruppen aufweisen, einen Alkohol aufweisen.

5. Verfahren nach einem der vorhergehenden Ansprüche, wobei die siliciumhaltige Verbindung eine Verbindung der Formel I 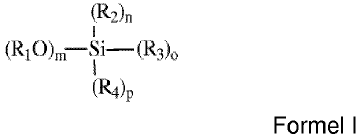 aufweist,
oder ein Polymer, das sich wiederholende Einheiten der Formel II aufweist, die an einem oder beiden Enden der Polymerkette von Wasserstoff oder einer Alkylgruppe abgeschlossen wird, 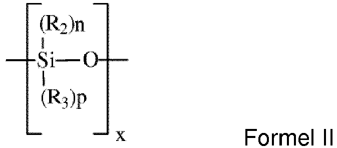
wobei R₁ Wasserstoff oder ein Alkyl, bevorzugt ein C₁- bis C₆-Alkyl, insbesondere bevorzugt ein C₁- oder ein C₂-Alkyl, wie z.B. Methylethyl, ist und m 1 bis 3, bevorzugt 3 ist;
wobei R₂, R₃ und R₄ jeweils unabhängig voneinander aus Alkyl, Alkylglycidoxy, Alkylamino, Aminoalkyl, Acrylat, Alkylhydantoin, Alkylacrylat und Alkylalken ausgewählt sind; und
in Formel I, n, m, o und p jeweils 0 bis 3 sind, vorausgesetzt, dass m+n+o+p = 4,
in Formel II, n und p jeweils 0, 1 oder 2 sind, vorausgesetzt, dass n + p =2.

6. Verfahren nach Anspruch 5, wobei die siliciumhaltige Verbindung eine Verbindung der Formel I ist, wobei m 3 ist, n 1 ist und o und p beide 0 sind, R₁ Wasserstoff, Methyl oder Ethyl ist.

7. Verfahren nach Anspruch 5 oder Anspruch 6, wobei R₂, R₃ und/oder R₄ der Formel III
-(CH₂)_{y}-R₅ Formel III
sind,
wobei Y 1 bis 5, bevorzugt 3, ist, R₅ aus Wasserstoff, Halogen, NH₂, C₁- bis C₁₈-Alkyl, C₁- bis C₁₈-Alkyldimethylammonium, Alkylmethacrylat, bevorzugt Ethyl- oder Propylmethacrylat, 5,5-Dialkylhydantoin, bevorzugt 5,5-Dimethylhydantoin, Alkylendiamin, bevorzugt Ethylendiamin, Perfluoralkyl, bevorzugt Perfluoroctyl und 3-Glycidoxy ausgewählt ist.

8. Verfahren nach einem der Ansprüche 1 bis 4, wobei die eine oder die mehreren siliciumhaltigen Verbindungen aus [3-(Trimethoxysilyl)propyl]-octadecyldimethylammonium-Chlorid, 3(3-Triethoxysilylpropyl)-5,5-dimethylhydantoin, Kalium-trimethylsilanolat, Triisopropylsilanol, Methoxydimethyloctylsilan, Poly(dimethylsiloxan) mit endständiger Hydroxylgruppe, (3-Chlorpropyl)triethoxysilan, (3-Chlorpropyl)dimethoxymethylsilan, Octadecyltrimethoxysilan, 3-Aminopropyltriethoxysilan, 3-(Trimethoxysilyl)propylmethacrylat, N-[3-(trimethoxysilyl)propyl]-ethylendiamin, und 3-Glycidoxypropyltrimethoxysilan, 1H,1H,2H,2H-Perfluordecyltrimethoxysilan ausgewählt sind.

9. Verfahren nach Anspruch 8, wobei die eine oder die mehreren siliciumhaltigen Verbindungen aus [3-(Trimethoxysilyl)propyl]-octadecyldimethylammonium-Chlorid und 3(3-Triethoxysilylpropyl)-5,5-dimethylhydantoin ausgewählt sind.

10. Verfahren nach einem der vorhergehenden Ansprüche, wobei das Substrat ein gewebtes oder ein nicht-gewebtes Gewebematerial aufweist.

11. Verfahren nach Anspruch 10, wobei das Gewebematerial aus einem oder mehreren der Folgenden ausgewählt ist: Baumwolle, Polyester, Nylon, Wolle, Leder, Reyon, Polyethlyen, Polyvinylchlorid, Polyvinylalkohol, Polyvinylamin und Polyharnstoff.

12. Verfahren nach einem der Ansprüche 1 bis 9, wobei das Substrat eines oder mehrere Materialien aufweist, die aus Aluminiumoxid, Titandioxid, Glas, Nylon, Kaolinit, Barasym, Siliciumdioxid, Kieselsäure, Molsieben, Montmorillonit, Polyurethan, Ethylenglycol, Glycerol, Catechol, Zeolith, Vermiculit und Bohemit ausgewählt sind.

13. Verfahren nach einem der vorhergehenden Ansprüche, wobei das Verfahren ein Kontaktieren des Substrats mit 3(3-Triethoxysilylpropyl)-5,5-dimethylhydantoin, ein Freilegen der Verbindungen für elekromagnetische Strahlung mit einer Frequenz von 0,3 bis 30 GHz, und ein anschließendes Behandeln des Substrats mit einer halogenierenden Substanz aufweist.

14. Substrat, das siliciumhaltige Verbindungen aufweist, die sich chemisch an einer Oberfläche davon anlagern, wobei die siliciumhaltigen Verbindungen in einer Anordnung auf der Oberfläche durch das nach einem der Ansprüche 2 bis 13 definierte Verfahren angelagert und geordnet sind.

15. Substrat nach Anspruch 14, wobei sich die siliciumhaltigen Verbindungen regioselektiv an der Oberfläche des Substrats angelagert haben.

## Revendications

1. Procédé d'attachement chimique d'un ou de plusieurs composés contenant du silicium à un substrat, le procédé comprenant :
l'utilisation d'un ou de plusieurs composés contenant du silicium choisis parmi les composés siloxanes, les composés silanols, les composés éthers silyliques, les composés silanolates, les composés halogénosilanes, les composés silatranes et les composés silazanes ;
la mise en contact d'un ou de plusieurs des composés contenant du silicium avec une surface d'un substrat ayant une pluralité de sites nucléophiles sur celui-ci, les sites nucléophiles comprenant un ou plusieurs groupes nucléophiles contenant un ou plusieurs éléments parmi 0, S et N ;
et l'exposition des composés contenant du silicium et de la surface à un rayonnement électromagnétique ayant une fréquence de 0,3 à 30 GHz,
le ou les composés contenant du silicium venant à s'attacher chimiquement aux groupes nucléophiles.

2. Procédé selon la revendication 1, dans lequel les composés contenant du silicium attachés au substrat créent un arrangement sur la surface du substrat.

3. Procédé selon la revendication 2, dans lequel le substrat a un ou plusieurs sites nucléophiles sur sa surface ou un ou plusieurs composés ayant des groupes nucléophiles sont présents sur la surface.

4. Procédé selon la revendication 3, dans lequel le ou les composés ayant des groupes nucléophiles comprennent un alcool.

5. Procédé selon l'une quelconque des revendications précédentes, dans lequel le composé contenant du silicium comprend un composé de formule I 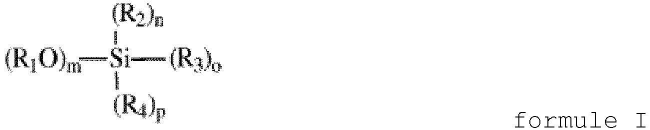 ou un polymère ayant des motifs répétés de formule II, qui peut se terminé par un atome d'hydrogène ou un groupe alkyle à l'une des extrémités ou aux deux extrémités de la chaine du polymère, 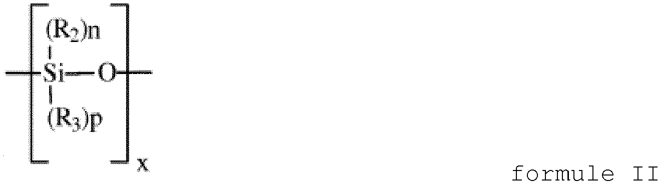
dans laquelle R₁ est un atome d'hydrogène ou un groupe alkyle, de préférence un groupe alkyle en C₁ à C₆, plus préférablement un groupe alkyle en C₁ ou C₂, tel qu'un groupe méthyle, un groupe éthyle, et m vaut de 1 à 3, de préférence 3 ;
R₂, R₃ et R₄ sont chacun indépendamment choisis parmi les groupes alkyle, alkylglycidoxy, alkylamino, aminoalkyle, acrylate, alkylhydantoïne, acrylate d'alkyle et alkylalcène ; et
dans la formule I, n, m, o et p valent chacun de 0 à 3, à condition que m + n + o + p = 4,
dans la formule II, n et p valent chacun 0, 1 ou 2, à condition que n + p = 2.

6. Procédé selon la revendication 5, dans lequel le composé contenant du silicium est un composé de formule I, dans laquelle m vaut 3, n vaut 1 et o et p valent tous les deux 0, R₁ est un atome d'hydrogène, un groupe méthyle ou un groupe éthyle.

7. Procédé selon la revendication 5 ou la revendication 6, dans lequel R₂, R₃ et/ou R₄ sont représentés par la formule III
-(CH₂)_{y}-R₅ formule III
dans laquelle Y vaut de 1 à 5, de préférence 3, R₅ est choisi parmi un atome d'hydrogène, un atome d'halogène, NH₂, un groupe alkyle en C₁ à C₁₈, un groupe (alkyle en C₁ à C₁₈)diméthylammonium, un groupe méthacrylate d'alkyle, de préférence un groupe méthacrylate d'éthyle ou de propyle, un groupe 5,5-dialkylhydantoïne, de préférence un groupe 5,5-diméthylhydantoïne, un groupe alkylènediamine, de préférence un groupe éthylènediamine, un groupe perfluoroalkyle, de préférence un groupe perfluorooctyle et un groupe 3-glycidoxy.

8. Procédé selon l'une quelconque des revendications 1 à 4, dans lequel le ou les composés contenant du silicium sont choisis parmi le chlorure de [3-(triméthoxysilyl)propyl]-octadécyldiméthylammonium, la 3-(3-triéthoxysilylpropyl)-5,5-diméthylhydantoïne, le triméthylsilanolate de potassium, le triisopropylsilanol, le méthoxydiméthyloctylsilane, un poly(diméthylsiloxane) à terminaison hydroxy, le (3-chloropropyl)triéthoxysilane, le (3-chloropropyl)diméthoxyméthylsilane, l'octadécyltriméthoxysilane, le 3-aminopropyltriéthoxysilane, le méthacrylate de 3-(triméthoxysilyl)propyle, la N-[3-(triméthoxysilyl)propyl]-éthylènediamine et le 3-glycidoxypropyltriméthoxysilane, le 1H,1H,2H,2H-perfluorodécyltriméthoxysilane.

9. Procédé selon la revendication 8, dans lequel le ou les composés contenant du silicium sont choisis parmi le chlorure de [3-(triméthoxysilyl)propyl]-octadécyldiméthylammonium et la 3-(3-triéthoxysilylpropyl)-5,5-diméthylhydantoïne.

10. Procédé selon l'une quelconque des revendications précédentes, dans lequel le substrat comprend un tissu tissé ou non tissé.

11. Procédé selon la revendication 10, dans lequel le tissu est choisi parmi le coton, le polyester, le nylon, la laine, le cuir, la rayonne, un polyéthylène, un polychlorure de vinyle, un alcool polyvinylique, une polyvinylamine et/ou une polyurée.

12. Procédé selon l'une quelconque des revendications 1 à 9, dans lequel le substrat comprend un ou plusieurs matériaux choisis parmi l'oxyde d'aluminium, le dioxyde de titane, le verre, le nylon, la kaolinite, le barasym, le dioxyde de silicium, la silice, les tamis moléculaires, la montmorillonite, le polyuréthane, l'éthylène glycol, le glycérol, le catéchol, la zéolite, la vermiculite et la boéhmite.

13. Procédé selon l'une quelconque des revendications précédentes, le procédé comprenant la mise en contact du substrat avec de la 3-(3-triéthoxysilylpropyl)-5,5-diméthylhydantoïne, l'exposition des composés à un rayonnement électromagnétique ayant une fréquence de 0,3 à 30 GHz, et ensuite le traitement du substrat avec une substance halogénante.

14. Substrat ayant des composés contenant du silicium chimiquement attachés à une surface de celui-ci, dans lequel les composés contenant du silicium sont attachés et organisés en un arrangement sur la surface par le procédé tel que défini selon l'une quelconque des revendications 2 à 13.

15. Substrat selon la revendication 14, dans lequel les composés contenant du silicium ont été attachés régiosélectivement à la surface du substrat.
